# EUROPEAN PATENT APPLICATION

(11) **EP 1 168 647 A2**
(43) Date of publication of application: **02.01.2002**
(21) Application number: 01114781.6
(22) Date of filing: 26.06.2001
(51) Int. Cl.: H04B 1/40

(54) **Method and system for radio communication apparatus and semiconductor integrated circuit therefor**

(30) Priority: 26.06.2000 JP 2000191316
(71) Applicant: KABUSHIKI KAISHA TOSHIBA, Kawasaki-shi, Kanagawa-ken 210-8572 (JP)
(72) Inventor: Yoshimoto, Takeshi, Intellectual Property Division, Minato-ku, Tokyo 105-8001 (JP)
(74) Representative: HOFFMANN - EITLE

(57) **Abstract**

The electronic apparatus has a radio signal characteristic extractor (5) for extracting a characteristic of the received radio signal. A radio signal converter (6) converts the received radio signal into a reception signal on the basis of the extracted characteristic of the radio signal. A demodulator (9, 9A, 9B) demodulates the reception signal by selecting a demodulation scheme on the basis of the extracted characteristic of the radio signal. A reception communication protocol processing unit (10A, 10B) executes a communication protocol process of the demodulated reception signal by selecting a communication protocol processing scheme on the basis of the extracted characteristic of the radio signal.

## Description

The present invention relates to radio communications and, more particularly, to a radio communication system compatible to a plurality of communication schemes, an electronic apparatus with a radio communication function, a semiconductor integrated circuit device for a radio communication, and a radio communication method.

Along with advance of the radio communication technologies, communication schemes, i.e., communication protocols and signal processing methods are being improved unceasingly. Many communication schemes have been put into practical use, but communication terminals that can be used are often limited in different regions or countries due to different communication schemes.

The present invention has been made in consideration of the above situation, and has as its object to provide a radio communication system, an electronic apparatus with a radio communication function, a semiconductor integrated circuit device for a radio communication, and a radio communication method, which can relax or remove limitations imposed on communication terminals that can be used in different regions or countries due to different communication schemes.

In order to achieve the above object, a radio communication system according to the present invention a radio communication system comprising:
a radio reception unit for receiving a radio signal, extracting a characteristic of the received radio signal, and converting the received radio signal into a reception signal; and
a reception signal processing unit for converting the reception signal into reception data on the basis of the extracted characteristic of the radio signal.

An electronic apparatus with a radio communication function according to the present invention an electronic apparatus with a radio communication function, comprising:
a radio reception unit for receiving a radio signal, extracting a characteristic of the received radio signal, and converting the received radio signal into a reception signal; and
a reception signal processing unit for converting the reception signal into reception data on the basis of the extracted characteristic of the radio signal.

A first semiconductor integrated circuit device for a radio communication according to the present invention a semiconductor integrated circuit device for a radio communication, comprising:
a receiver for receiving a radio signal;
a radio signal characteristic extractor for extracting a characteristic of the received radio signal; and
a reception radio signal converter for converting the received radio signal into a reception signal.

A second semiconductor integrated circuit device for a radio communication according to the present invention a semiconductor integrated circuit device for a radio communication, comprising:
a demodulator for demodulating a reception signal by selecting a demodulation scheme on the basis of an extracted characteristic of a radio signal;
a reception communication protocol processing unit for executing a communication protocol process of the demodulated reception signal by selecting a communication protocol processing scheme on the basis of the extracted characteristic of the radio signal; and
a decoder for decoding the reception signal, that has undergone the communication protocol process, by selecting a decoding scheme on the basis of the extracted characteristic of the radio signal.

A radio communication method according to the present invention a radio communication method comprising the steps of:
receiving a radio signal;
extracting a characteristic of the received radio signal from the received radio signal;
converting the received radio signal into a reception signal by selecting a conversion scheme on the basis of the extracted characteristic of the radio signal;
demodulating the reception signal by selecting a demodulation scheme on the basis of the extracted characteristic of the radio signal;
executing a communication protocol process of the demodulated reception signal by selecting a communication protocol processing scheme on the basis of the extracted characteristic of the radio signal; and
decoding the reception signal, that has undergone the communication protocol process, by selecting a decoding scheme on the basis of the extracted characteristic of the radio signal.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the basic arrangement of an electronic apparatus with a radio communication function, which comprises a radio communication system according to the first embodiment of the present invention;
FIG. 2 is a block diagram showing the basic arrangement of an electronic apparatus with a radio communication function, which comprises a radio. communication system according to the second embodiment of the present invention;
FIG. 3 is a block diagram showing the basic arrangement of an electronic apparatus with a radio communication function, which comprises a radio communication system according to the third embodiment of the present invention;
FIG. 4 is a block diagram showing the basic arrangement of an electronic apparatus with a radio communication function, which comprises a radio communication system according to the fourth embodiment of the present invention;
FIG. 5 is a block diagram showing the basic arrangement of an electronic apparatus with a radio communication function, which comprises a radio communication system according to the fifth embodiment of the present invention;
FIG. 6 is a block diagram showing the basic arrangement of a semiconductor integrated circuit device for a radio communication according to the sixth embodiment of the present invention;
FIG. 7 is a block diagram showing the basic arrangement of a semiconductor integrated circuit device for a radio communication according to the seventh embodiment of the present invention;
FIG. 8 is a view showing the frequency bands of main radio communication schemes;
FIG. 9 is a block diagram showing the basic arrangement of a radio feature extractor according to the eighth embodiment of the present invention;
FIG. 10 is a block diagram showing the combination of the fifth and sixth embodiments of the present invention; and
FIG. 11 is a block diagram showing the combination of the fifth and seventh embodiments of the present invention.

Preferred embodiments of the present invention will be described hereinafter with reference to the accompanying drawings. In the following description, the same reference numerals denote common parts throughout the drawings.

### (First Embodiment)

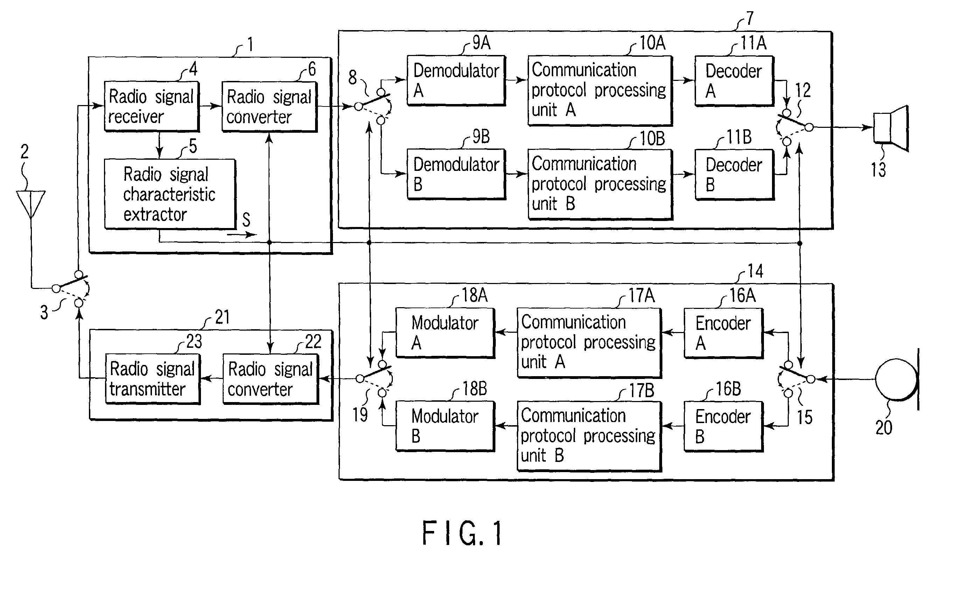

FIG. 1 is a block diagram showing the basic arrangement of an electronic apparatus with a radio communication function, which comprises a radio communication system according to the first embodiment of the present invention. In this embodiment, a communication terminal, e.g., a portable phone, will be exemplified as the electronic apparatus with a radio communication function.

As shown in FIG. 1, a radio reception unit 1 includes a radio signal receiver 4 for receiving a radio signal via an antenna 2 and antenna switch 3, a radio signal characteristic extractor 5, and a radio signal converter 6.

The radio signal characteristic extractor 5 extracts a characteristic from the frequency, modulation, or the like of the received radio signal, and identifies a communication scheme on the basis of the extracted characteristic. The radio signal characteristic extractor 5 of this embodiment identifies communication scheme A or B on the basis of the extracted characteristic. The extractor 5 supplies the identification result to the radio signal converter 6 and a modem/baseband reception signal processing unit 7 as a control signal S.

The radio signal converter 6 down-converts, e.g., the received radio signal, i.e., a high-frequency radio signal containing a carrier frequency, into a reception signal of a lower frequency, and supplies the converted signal to the modem/baseband reception signal processing unit 7. The radio signal converter 6 of this embodiment selects one of a down conversion scheme compatible to communication scheme A or that compatible to communication scheme B different from communication scheme A on the basis of the control signal S upon down conversion.

The modem/baseband reception signal processing unit 7 includes a reception signal input switch 8, a demodulator 9A, communication protocol processing unit 10A, and decoder 11A, which are compatible to communication scheme A; a demodulator 9B, communication protocol processing unit 10B, and decoder 11B, which are compatible to communication scheme B; and a reception data output switch 12.

The reception signal input switch 8 supplies the reception signal output from the radio signal converter 6 to one of the demodulators 9A and 9B on the basis of the control signal S.

Assume that the radio signal characteristic extractor 5 identifies that the communication scheme of the incoming radio signal is "A". In this case, the reception signal input switch 8 supplies the reception signal to the demodulator 9A. The demodulator 9A demodulates the incoming reception signal using a demodulation scheme compatible to communication scheme A. The demodulated reception signal is supplied to the communication protocol processing unit 10A. The communication protocol processing unit 10A executes a communication protocol process of the demodulated reception signal using a communication protocol processing scheme compatible to communication scheme A. Note that the communication protocol process includes, e.g., a process for demultiplexing audio data, control data, and the like from the demodulated reception signal. The reception signal that has undergone the communication protocol process is supplied to the decoder 11A. The decoder 11A decodes the processed reception signal using a decoding scheme compatible to communication scheme A, and outputs the decoded signal as reception data.

If the radio signal characteristic extractor 5 identifies that the communication scheme of the incoming radio signal is "B", the reception signal input switch 8 supplies the reception signal to the demodulator 9B. After that, the demodulator 9B demodulates the incoming reception signal using a demodulation scheme compatible to communication scheme B, the communication protocol processing unit 10B executes a communication protocol process of the demodulated reception signal using a communication protocol processing scheme compatible to communication scheme B, and the decoder 11B decodes the reception signal that has undergone the communication protocol process using a decoding scheme compatible to communication scheme B and outputs the decoded signal as reception data.

The reception data output switch 12 supplies the reception data (audio data in this embodiment) output from the decoder 11A or 11B on the basis of the control signal S to a loudspeaker 13 directly or via a voice communication unit (not shown) including a D/A converter and the like.

A modem/baseband transmission signal processing unit 14 includes a transmission data input switch 15, encoder 16A, communication protocol processing unit 17A, and modulator 18A, which are compatible to communication scheme A; encoder 16B, communication protocol processing unit 17B, and modulator 18B, which are compatible to communication scheme B; and a transmission signal output switch 19.

The transmission data input switch 15 supplies transmission data (audio data in this embodiment) input from a microphone 20 directly or via a voice communication unit (not shown) including an A/D converter and the like to one of the encoders 16A and 16B on the basis of the control signal S.

Assume that the radio signal characteristic extractor 5 identifies that the communication scheme of the incoming radio signal is "A". In this case, the transmission signal input switch 15 supplies the transmission data to the encoder 16A. The encoder 16A encodes the incoming transmission data using an encoding scheme compatible to communication scheme A. The encoded transmission data is sent to the communication protocol processing unit 17A. The communication protocol processing unit 17A executes a communication protocol process of the encoded transmission data using a communication protocol processing scheme compatible to communication scheme A. Note that the communication protocol process includes, e.g., a process for multiplexing the encoded transmission data and control data. The transmission data that has undergone the communication protocol process is supplied to the modulator 18A. The modulator 18A modulates the transmission data that has undergone the communication protocol process using a modulation scheme compatible to communication scheme A, and outputs the modulated data as a transmission signal.

On the other hand, assume that the radio signal characteristic extractor 5 identifies that the communication scheme of the incoming radio signal is "B". In this case, the transmission signal input switch 15 supplies the transmission data to the encoder 16B. After that, the encoder 16B encodes the incoming transmission data using an encoding scheme compatible to communication scheme B, the communication protocol processing unit 17B executes a communication protocol process of the encoded transmission data using a communication protocol processing scheme compatible to communication scheme B, and the modulator 18B modulates the transmission data that has undergone the communication protocol process using a modulation scheme compatible to communication scheme B, thus outputting the modulated data as a transmission signal.

The transmission signal output switch 19 supplies the transmission signal output from the modulator 18A or 18B to a radio transmission unit 21 on the basis of the control signal S.

The radio transmission unit 21 includes a radio signal converter 22, and a radio signal transmitter 23 for transmitting the transmission signal as a radio signal via the antenna switch 3 and antenna 2.

The radio signal converter 22 up-converts the frequency of the incoming transmission signal (low frequency) to a higher radio carrier frequency, and supplies the converted signal to the radio signal transmitter 23. The radio signal converter 22 of this embodiment selects an up-conversion scheme compatible to one of communication schemes A and B on the basis of the control signal S upon up conversion.

The radio signal transmitter 23 amplifies the up-converted transmission signal to a transmission power level, and transmits the transmission signal as a radio signal via the antenna switch 3 and antenna 2.

The communication terminal with such radio communication system extracts the characteristic of the incoming radio signal from that radio signal, and identifies the communication scheme used on the basis of the extracted characteristic. Based on this identification result, the conversion scheme of the radio signal converter 6, the demodulation, communication protocol processing, and decoding schemes of the modem/baseband reception signal processing unit 7, the encoding, communication protocol processing, and modulation schemes of the modem/baseband transmission signal processing unit 14, and the conversion scheme of the radio signal converter 22 are switched to those compatible to the identified communication scheme. Hence, a single communication terminal can cope with a plurality of communication schemes.

Since the communication scheme used is identified based on the extracted characteristic of the radio signal, and the communication scheme is switched based on the identification result, the operator need not make any troublesome operations such as switching operations or the like.

Furthermore, a characteristic is extracted from the incoming radio signal, and the communication scheme is identified based on the extracted characteristic. That is, since the communication scheme is identified at the time of receiving the radio signal, circuits for executing reception processes of the incoming radio signal, i.e., frequency conversion circuits, modulator/demodulator circuits, communication protocol process circuits, encoder/decoder circuits, and the like can be commonized. In this manner, according to the present invention, since the circuits can be commonized, size and cost reductions of the communication terminal can be achieved.

In the first embodiment, the conversion schemes of the radio signal converters 6 and 22 are switched in correspondence with communication scheme A or B. However, this process is not always necessary. This is because if the carrier frequencies of communication schemes A and B are equal to each other, down conversion of the radio signal converter 6 and up conversion of the radio signal converter 22 can be commonized.

In the first embodiment, both the receiving and transmitting sides have arrangements compatible to communication schemes A and B. Such arrangement is effective to allow two-way communications even when a partner communication terminal, a base station that relays a radio signal, or the like can cope with only one communication scheme.

In the present invention, however, at least the receiving side need only have an arrangement that can cope with communication schemes A and B. For example, when a partner communication terminal, a base station that relays a radio signal, or the like comprises the radio communication system according to the present invention, two-way communications are allowed irrespective of the communication scheme of an outgoing radio signal.

### (Second Embodiment)

In the first embodiment, communication schemes A and B are switched by controlling the switches 8, 12, 15, and 19 on the basis of the control signal S. However, communication schemes A and B can be switched without using the switches 8, 12, 15, and 19.

Such example will be described below as the second embodiment.

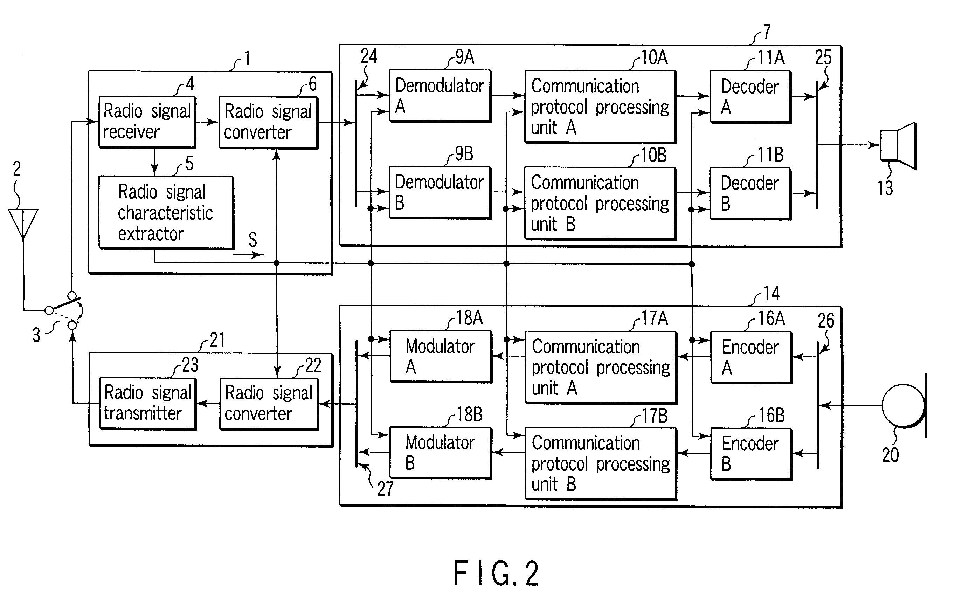

FIG. 2 is a block diagram showing the basic arrangement of an electronic apparatus with a radio communication function, which comprises a radio communication system according to the second embodiment of the present invention.

As shown in FIG. 2, the second embodiment is different from the first embodiment in that one of the circuit groups compatible to communication schemes A and B is selectively activated on the basis of the control signal S.

More specifically, a reception signal output from the radio signal converter 6 is supplied to a reception signal input line 24 of the modem/baseband reception signal processing unit 7. The reception signal input line 24 is connected to the demodulators 9A and 9B.

Assume that the radio signal characteristic extractor 5 identifies that the communication scheme of the incoming radio signal is "A". In this case, the demodulator 9A, communication protocol processing unit 10A, and decoder 11A are activated, while the demodulator 9B, communication protocol processing unit 10B, and decoder 11B are deactivated on the basis of the control signal S. As a result, the reception signal supplied to the reception signal input line 24 is input to the demodulator 9A, and is then input in turn to the communication protocol processing unit 10A and decoder 11A. The reception data output from the decoder 11A is supplied via a reception data output line 25 to the loudspeaker 13 directly or via a voice communication unit (not shown) including a D/A converter and the like.

If the radio signal characteristic extractor 5 identifies that the communication scheme of the incoming radio signal is "B", the demodulator 9B, communication protocol processing unit 10B, and decoder 11B are activated, while the demodulator 9A, communication protocol processing unit 10A, and decoder 11A are deactivated. Therefore, the reception signal supplied to the reception signal input line 24 is input to the demodulator 9B, and is then input in turn to the communication protocol processing unit 10B and decoder 11B. The reception data output from the decoder 11B is supplied via the reception data output line 25 to the loudspeaker 13 directly or via a voice communication unit (not shown) including a D/A converter and the like. A transmission data input line 26 is connected to the encoders 16A and 16B.

Transmission data input from the microphone 20 directly or via a voice communication unit (not shown) including an A/D converter and the like is supplied to the transmission data input line 26 of the modem/baseband transmission signal processing unit 14.

Assume that the radio signal characteristic extractor 5 identifies that the communication scheme of the incoming radio signal is "A". In this case, the encoder 16A, communication protocol processing unit 17A, and modulator 18A are activated, while the encoder 16B, communication protocol processing unit 17B, and modulator 18B are deactivated on the basis of the control signal S. As a result, the transmission data supplied to the transmission data input line 26 is input to the encoder 16A, and is input in turn to the communication protocol processing unit 17A and modulator 18A. The transmission signal output from the modulator 18A is supplied to the radio signal converter 22 via a transmission signal output line 27.

On the other hand, assume that the radio signal characteristic extractor 5 identifies that the communication scheme of the incoming radio signal is "B". In this case, the encoder 16B, communication protocol processing unit 17B, and modulator 18B are activated, while the encoder 16A, communication protocol processing unit 17A, and modulator 18A are deactivated on the basis of the control signal S. As a result, the transmission data supplied to the transmission data input line 26 is input to the encoder 16B, and is input in turn to the communication protocol processing unit 17B and modulator 18B. The transmission signal output from the modulator 18B is supplied to the radio signal converter 22 via the transmission signal output line 27.

As described in the second embodiment, the communication scheme switching process can be implemented without using any switches. The second embodiment can also obtain the same effects as those in the first embodiment.

### (Third Embodiment)

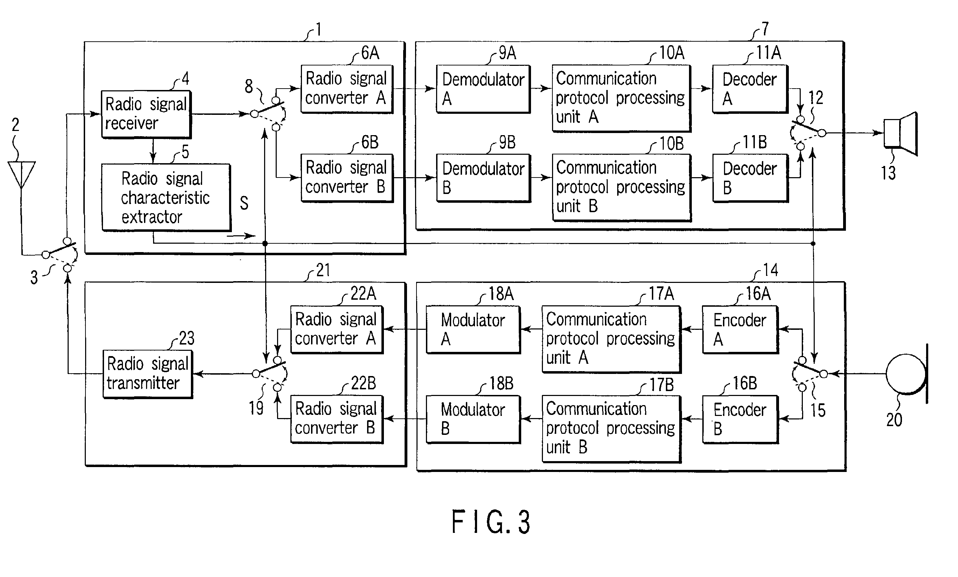

FIG. 3 is a block diagram showing the basic arrangement of an electronic apparatus with a radio communication function, which comprises a radio communication system according to the third embodiment of the present invention.

As shown in FIG. 3, the third embodiment is different from the first embodiment in that the radio signal converters 6 and 22 respectively comprise radio signal converters 6A and 22A compatible to communication scheme A, and radio signal converters 6B and 22B compatible to communication scheme B.

In this way, the radio signal converters 6 and 22 can be prepared in correspondence with communication schemes A and B.

### (Fourth Embodiment)

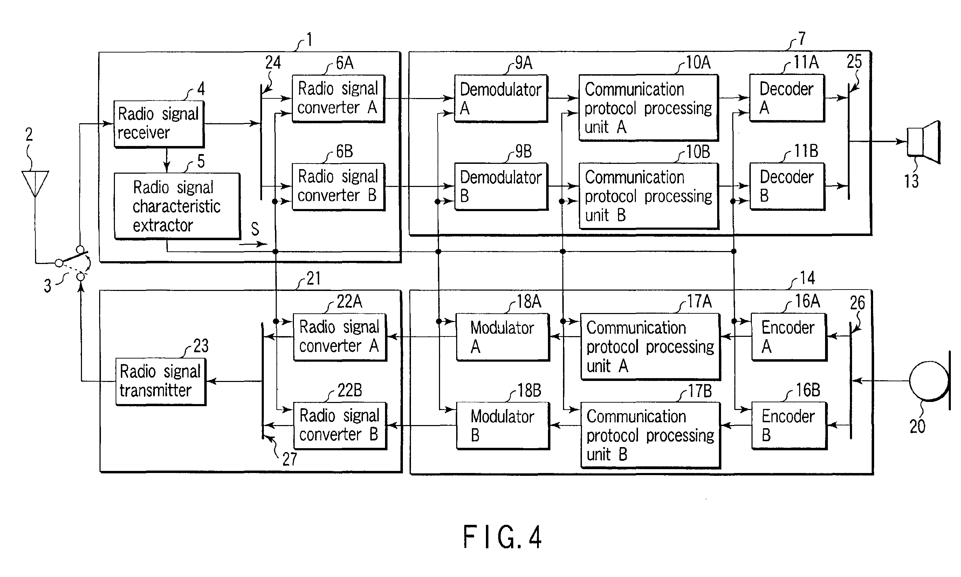

FIG. 4 is a block diagram showing the basic arrangement of an electronic apparatus with a radio communication function, which comprises a radio communication system according to the fourth embodiment of the present invention.

As shown in FIG. 4, the fourth embodiment is different from the second embodiment in that the radio signal converters 6 and 22 respectively comprise radio signal converters 6A and 22A compatible to communication scheme A, and radio signal converters 6B and 22B compatible to communication scheme B.

In this way, even in such switchless implementation, the radio signal converters 6 and 22 can be prepared in correspondence with communication schemes A and B.

### (Fifth Embodiment)

In the first to fourth embodiments, circuits (9A, 10A, 11A, 9B, 10B, and 11B) for executing reception signal processes of an incoming radio signal are prepared in correspondence with communication schemes A and B. Likewise, circuits (16A, 17A, 18A, 16B, 17B, and 18B) for executing transmission signal processes of transmission data are also prepared in correspondence with communication schemes A and B. That is, compatibility to different communication schemes A and B is implemented by hardware or firmware.

However, compatibility to different communication schemes A and B may be implemented by software.

Such example will be described below as the fifth embodiment.

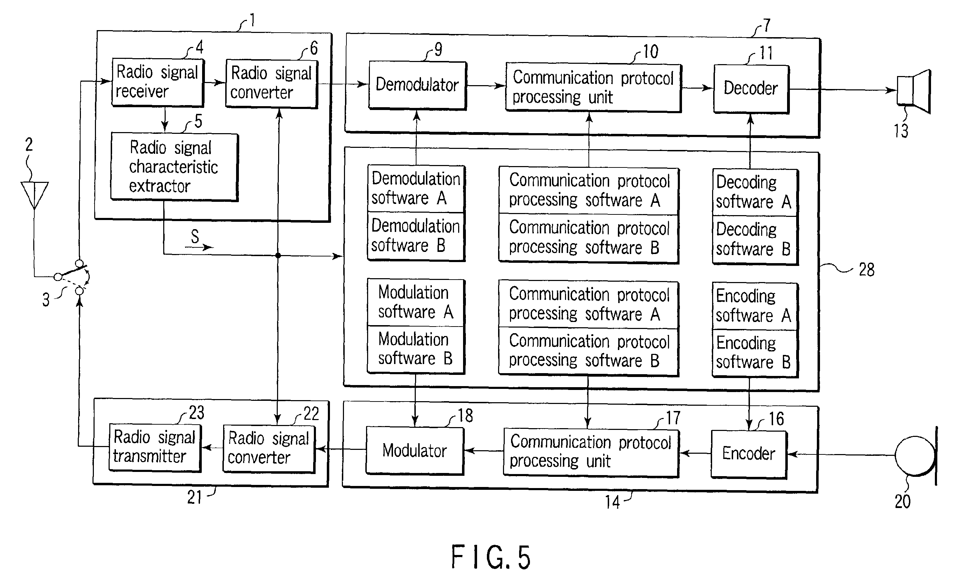

FIG. 5 is a block diagram showing the basic arrangement of an electronic apparatus with a radio communication function, which comprises a radio communication system according to the fifth embodiment of the present invention.

As shown in FIG. 5, the fifth embodiment comprises a storage device 28. The storage device 28 stores reception signal processing softwares (demodulation softwares A and B, reception communication protocol processing softwares A and B, and decoding softwares A and B) as reception signal processing information in correspondence with communication schemes A and B. Likewise, the storage device 28 stores transmission signal processing softwares (encoding softwares A and B, transmission communication protocol processing softwares A and B, and modulation softwares A and B) as transmission signal processing information in correspondence with communication schemes A and B.

The storage device 28 receives the control signal S from the radio signal characteristic extractor 5. The storage device 28 selectively loads, based on the control signal S, the reception signal processing softwares (demodulation software A, reception communication protocol processing software A, and decoding software A) compatible to communication scheme A, or the reception signal processing softwares (demodulation software B, reception communication protocol processing software B, and decoding software B) compatible to communication scheme B. The loaded reception signal processing softwares are supplied to the modem/baseband reception signal processing unit 7. The modem/baseband reception signal processing unit 7 executes reception signal processes of a reception signal, which has been received and converted by the radio reception unit 1, in accordance with the supplied reception signal processing schemes.

Also, the storage device 28 selectively loads, based on the control signal S, the transmission signal processing software (encoding software A, transmission communication protocol processing software A, and modulation software A) compatible to communication software A, or the transmission signal processing softwares (encoding software B, transmission communication protocol processing software B, and modulation software B) compatible to communication scheme B. The loaded transmission signal processing softwares are supplied to the modem/baseband transmission signal processing unit 14. The modem/baseband transmission signal processing unit 14 executes transmission signal processes of transmission data (audio data in this embodiment) input from the microphone 20 directly or via a voice communication unit (not shown) including an A/D converter and the like in accordance with the supplied transmission signal processing softwares.

The advantage of such system is to be able to use common internal circuits of the modem/baseband reception signal processing unit 7 and modem/baseband transmission signal processing unit 14 when these processing units 7 and 14 use, e.g., digital signal processings (DSPs), programmable logical circuit elements (PLDs), and the like. The storage device 28 stores DSP software, PLD circuit control information, and the like compatible to different communication schemes A and B, and when such software and information are selectively loaded in accordance with the control signal S, different communication schemes A and B can be coped with.

### (Sixth Embodiment)

The radio communication system according to the present invention can be implemented by a semiconductor integrated circuit device (LSI).

Such example will be described below as the sixth embodiment.

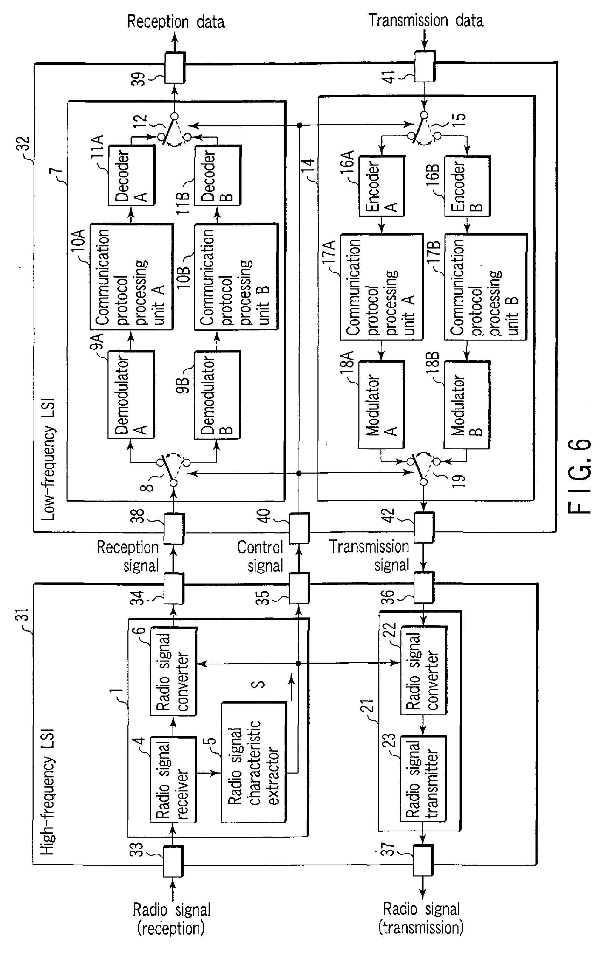

FIG. 6 is a block diagram showing the basic arrangement of a semiconductor integrated circuit device for a radio communication according to the sixth embodiment of the present invention.

As shown in FIG. 6, a radio communication system can be basically divided into a radio communication unit that processes high frequency signals, and a modem/baseband unit that processes low frequency signals. Hence, the radio communication system according to the present invention can be implemented by a high-frequency LSI 31 and low-frequency LSI 32.

The radio communication unit that processes high frequency signals is integrated on the high-frequency LSI 31. More specifically, the high-frequency LSI 31 comprises an input terminal 33 for receiving a radio signal (reception), a radio reception unit 1 for converting the input radio signal into a reception signal, an output terminal 34 for outputting the reception signal, a radio signal characteristic extractor 5 for extracting a characteristic of the input radio signal, and identifying the communication scheme of the input radio signal from the extracted characteristic, an output terminal 35 for outputting a control signal S output from the radio signal characteristic extractor 5, an input terminal 36 for receiving a transmission signal, a radio transmission unit 21 for converting the input transmission signal into a radio signal (transmission), and an output terminal 37 for outputting the converted radio signal.

The modem/baseband unit that processes low frequency signals is integrated on the low-frequency LSI 32. More specifically, the low-frequency LSI 32 comprises an input terminal 38 for receiving a reception signal, a modem/baseband reception signal processing unit 7 for executing reception signal processes of the input reception signal, and converting it into reception data, an output terminal 39 for outputting the reception data, an input terminal 40 for receiving the control signal S, an input terminal 41 for receiving a transmission signal, a modem/baseband transmission signal processing unit 14 for executing transmission signal processes of the input transmission data and converting it into a transmission signal, and an output terminal 42 for outputting the transmission signal. The high-frequency LSI 31 is electrically connected to the low-frequency LSI 32 on, e.g., a circuit board. In this manner, the radio communication system according to the present invention can be implemented using a semiconductor integrated circuit device.

The low-frequency LSI 32 integrates circuits (9A, 10A, 11A, 16A, 17A, and 18A) compatible to communication scheme A, and circuits (9B, 10B, 11B, 16B, 17B, and 18B) compatible to communication scheme B on a single chip. Of course, circuits compatible to communication schemes A and B may be separately integrated on different chips.

However, when circuits compatible to communication schemes A and B are integrated on a single chip, which operates in synchronism with the control signal S from the radio signal characteristic extractor 5, as in the sixth embodiment, a consumption current reduction and noise reduction can be achieved compared to a case wherein those circuits are separately integrated on different chips.

### (Seventh Embodiment)

The seventh embodiment is another example of implementing the radio communication system according to the present invention using a semiconductor integrated circuit device (LSI).

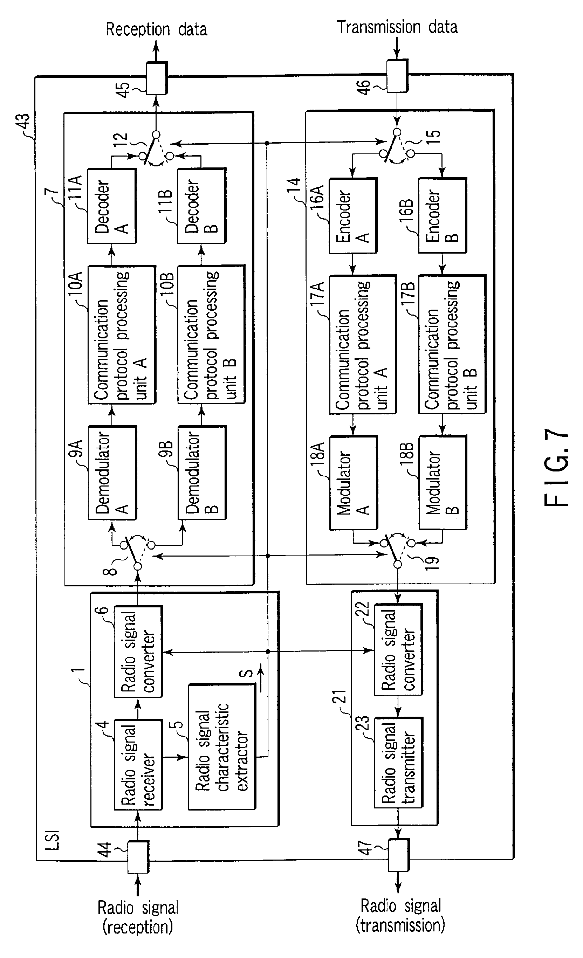

FIG. 7 is a block diagram showing the basic arrangement of a semiconductor integrated circuit device for a radio communication according to the seventh embodiment of the present invention.

As shown in FIG. 7, the seventh embodiment is different from the sixth embodiment in that the radio communication system according to the present invention is integrated on a single LSI 43.

The LSI 43 comprises an input terminal 44 for receiving a radio signal (reception), a radio reception unit 1 for converting the input radio signal into a reception signal, a radio signal characteristic extractor 5 for extracting a characteristic of the input radio signal, and identifying the communication scheme of the input radio signal from the extracted characteristic, a modem/baseband reception signal processing unit 7 for executing reception signal processes of the input reception signal, and converting it into reception data, an output terminal 45 for outputting the reception data, an input terminal 46 for receiving transmission data, a modem/baseband transmission signal processing unit 14 for executing transmission signal processes of the input transmission data and converting it into a transmission signal, a radio transmission unit 21 for converting the transmission signal into a radio signal (transmission), and an output terminal 47 for outputting the converted radio signal.

As described above, the radio communication system according to the present invention can be implemented by the single LSI 43.

### (Eighth Embodiment)

The eighth embodiment is related to an example of radio signal characteristic extraction.

As an example of extracting a characteristic from a radio signal, the frequency band of the radio signal is extracted. At present, several international main communication schemes have different frequency bands. A communication scheme currently used can be known by extracting the frequency band of a received radio signal.

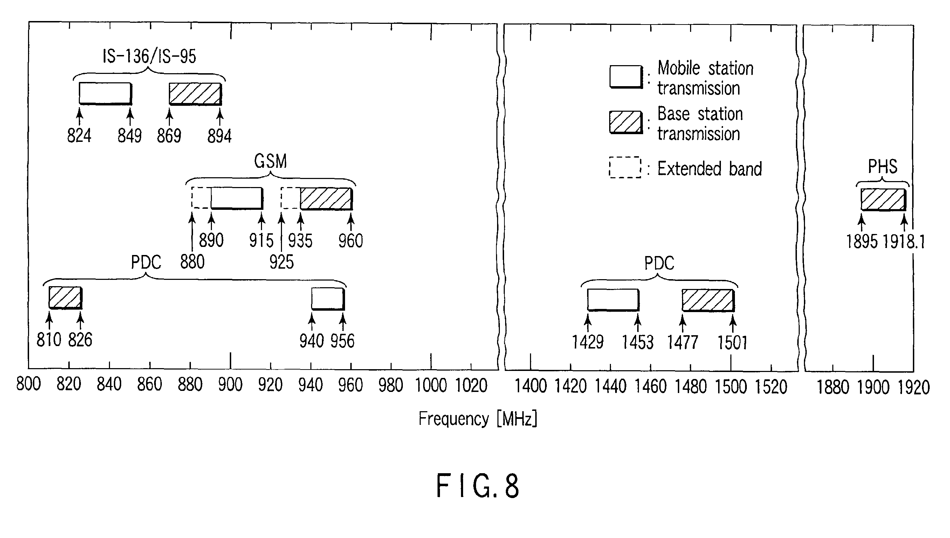

FIG. 8 is a view showing the frequency bands of the main communication schemes.

As shown in FIG. 8, the frequency band of base station transmission in IS-136/IS-95 falls within the range of 869 MHz to 894 MHz; the frequency band of base station transmission in GSM, 925 MHz to 960 MHz (including the extended band); the frequency of base station transmission in PDC, 810 MHz to 826 MHz or 1,477 MHz to 1,501 MHz; and the frequency band of base station transmission in PHS, 1,895 MHz to 1,918.1 MHz.

Assume that the frequency of a received radio signal is about 900 MHz. In this case, the received radio signal can be identified as a GSM signal. A communication scheme can be identified by incorporating a circuit for extracting the frequency band of a received radio signal in a radio signal characteristic extractor 5.

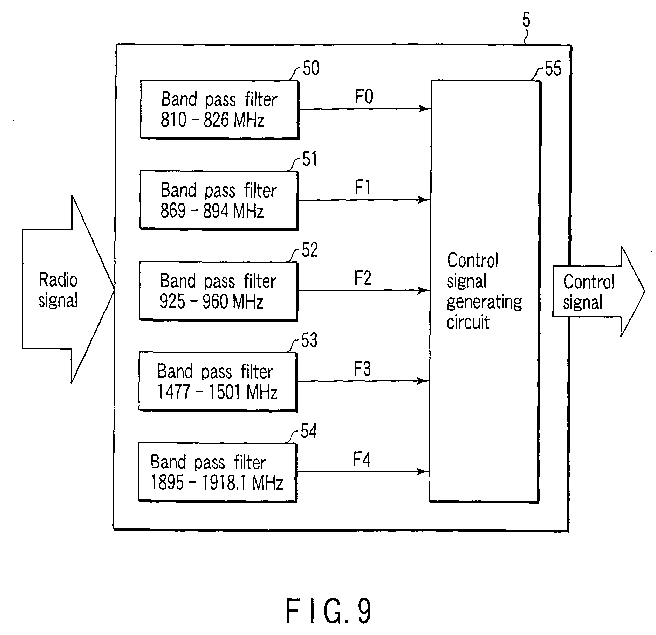

A bandpass filter is an example of the circuit for extracting the frequency band. A detailed arrangement of the radio signal chracteristic extractor 5 incorporating a bandpass filter is shown in FIG. 9.

As shown in FIG. 9, bandpass filters 50 to 54 are arranged for the frequency bands of the main communication schemes, respectively. The bandpass filters 50 to 54 output signals F0 to F4 representing that signals have passed through them. The signals F0 to F4 are input to a control signal generating circuit 55.

In accordance with the input signals F0 to F4, the control signal generating circuit 55 identifies a communication scheme currently used. The control signal generating circuit 55 outputs an identification result as a control signal S.

The present invention has been explained by way of its first to eighth embodiments. However, the present invention is not limited to these embodiments, and various modifications can be made within the scope of the gist of the present invention upon practicing the present invention.

For example, in the above embodiments, a portable phone has been exemplified as the electronic apparatus with a radio communication function. However, the present invention can be applied to any other apparatuses other than the portable phone. For example, the present invention can be applied to an electronic device which converts text data, still/moving image data, or the like in place of audio data into a radio signal, and transmits/receives the radio signal, an information terminal represented by a PDA (Personal Digital Assistant), and the like.

In the above embodiments, the arrangements compatible to two different communication schemes A and B have been exemplified. However, the number of communication schemes to be coped with is not limited to two, but the present invention can cope with three or more communication schemes.

The above embodiments can be practiced solely or in combination as needed.

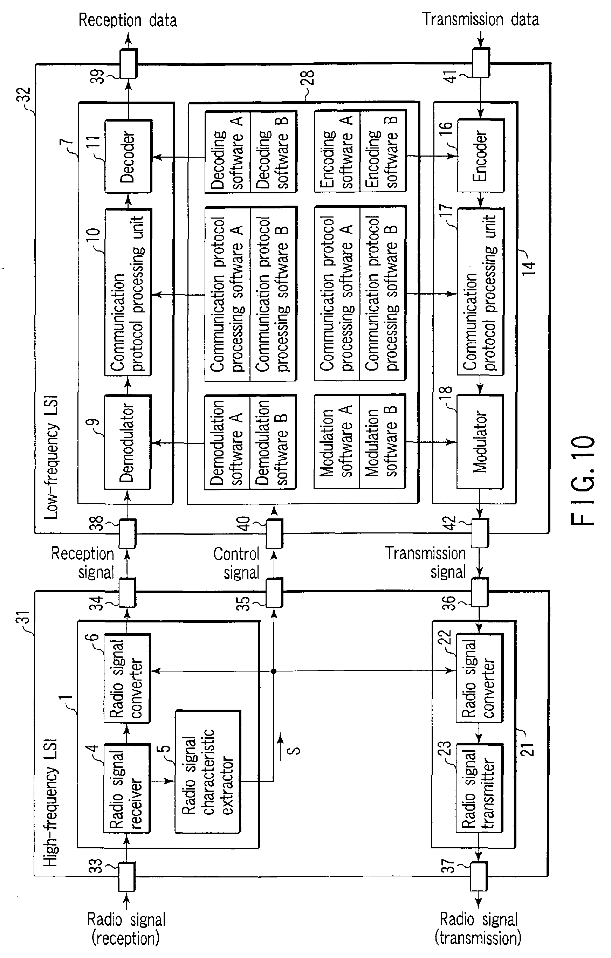

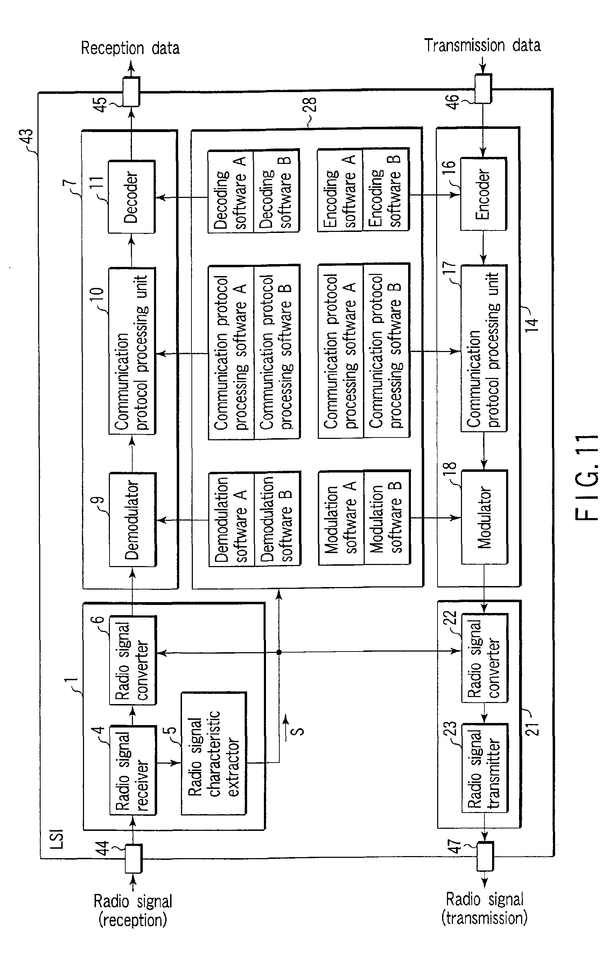

An implementation of a radio communication system according to the present invention in the form of an LSI, which has been described with reference to, e.g., the sixth or seventh embodiment, is not limited to the first embodiment, but can be achieved by combining the second, third, fourth, or fifth embodiment (FIGS. 10 and 11).

Furthermore, the above embodiments include inventions in various stages, and the inventions in various stages can be extracted by appropriately combining a plurality of constituent requirements disclosed in the respective embodiments.

A radio communication system according to the present invention is different from a conventional dual mode radio communication system in that a received radio signal is identified before the received radio signal is demodulated. A radio signal converter 6 and a modem/baseband reception signal processing unit 7 can be shared by different radio communication schemes. This can omit a circuit board arranged for each radio communication scheme, thereby simplifying the radio communication system. This makes it possible to further downsize an electronic apparatus with a radio function.

## Claims

1. A radio communication system **characterized by** comprising:
a radio reception unit (1) for receiving a radio signal, extracting a characteristic of the received radio signal, and converting the received radio signal into a reception signal; and
a reception signal processing unit (7) for converting the reception signal into reception data on the basis of the extracted characteristic of the radio signal.

2. The system according to claim 1, **characterized in that** the radio reception unit (1) comprises a receiver (4) for receiving the radio signal, a radio signal characteristic extractor (5) for extracting the characteristic of the received radio signal, and a reception radio signal converter (6) for converting the received radio signal into the reception signal, and
the reception signal processing unit (7) comprises a demodulator (9, 9A, 9B) for demodulating the reception signal by selecting a demodulation scheme on the basis of the extracted characteristic of the radio signal, a reception communication protocol processing unit (10, 10A, 10B) for executing a communication protocol process of the demodulated reception signal by selecting a communication protocol processing scheme on the basis of the extracted characteristic of the radio signal, and a decoder (11, 11A, 11B) for decoding the reception signal, that has undergone the communication protocol process, by selecting a decoding scheme on the basis of the extracted characteristic of the radio signal.

3. The system according to claim 2, **characterized in that** the reception radio signal converter (6) converts the received radio signal into the reception signal by selecting a conversion scheme on the basis of the extracted characteristic of the radio signal.

4. The system according to claim 1, **characterized by** further comprising:
a transmission signal processing unit (14) for converting transmission data into a transmission signal on the basis of the extracted characteristic of the radio signal; and
a radio transmission unit (21) for converting the transmission signal into a radio signal, and transmitting the converted radio signal.

5. A system according to claim 4, **characterized in that** the transmission signal processing unit (14) comprises an encoder (16, 16A, 16B) for encoding the transmission data by selecting an encoding scheme on the basis of the extracted characteristic of the radio signal, a transmission communication protocol processing unit (17, 17A, 17B) for executing a communication protocol process of the encoded transmission data by selecting a communication protocol processing scheme on the basis of the extracted characteristic of the radio signal, and a modulator (18, 18A, 18B) for modulating the transmission data, that has undergone the communication protocol process, by selecting a modulation scheme on the basis of the extracted characteristic of the radio signal, and
the radio transmission unit (21) comprises a transmission radio signal converter (22) for converting the modulated transmission data into a radio signal, and a radio transmitter (23) for transmitting the converted radio signal.

6. The system according to claim 5, **characterized in that** the transmission radio signal converter (22) converts the modulated transmission data into the radio signal by selecting a conversion scheme on the basis of the extracted characteristic of the radio signal.

7. An electronic apparatus with a radio communication function, **characterized by** comprising:
a radio reception unit (1) for receiving a radio signal, extracting a characteristic of the received radio signal, and converting the received radio signal into a reception signal; and
a reception signal processing unit (7) for converting the reception signal into reception data on the basis of the extracted characteristic of the radio signal.

8. The apparatus according to claim 7, **characterized in that** the radio reception unit (1) comprises a receiver (4) for receiving the radio signal, a radio signal characteristic extractor (5) for extracting the characteristic of the received radio signal, and a reception radio signal converter (6) for converting the received radio signal into the reception signal, and
the reception signal processing unit (7) comprises a demodulator (9, 9A, 9B) for demodulating the reception signal by selecting a demodulation scheme on the basis of the extracted characteristic of the radio signal, a reception communication protocol processing unit (10, 10A, 10B) for executing a communication protocol process of the demodulated reception signal by selecting a communication protocol processing scheme on the basis of the extracted characteristic of the radio signal, and a decoder (11, 11A, 11B) for decoding the reception signal that has undergone the communication protocol process by selecting a decoding scheme on the basis of the extracted characteristic of the radio signal.

9. The apparatus according to claim 8, **characterized in that** the reception radio signal converter (6) converts the received radio signal into the reception signal by selecting a conversion scheme on the basis of the extracted characteristic of the radio signal.

10. The apparatus according to claim 7, **characterized by** further comprising:
a transmission signal processing unit (14) for converting transmission data into a transmission signal on the basis of the extracted characteristic of the radio signal; and
a radio transmission unit (21) for converting the transmission signal into a radio signal, and transmitting the converted radio signal.

11. The apparatus according to claim 10, **characterized in that** the transmission signal processing unit (14) comprises an encoder (16, 16A, 16B) for encoding the transmission data by selecting an encoding scheme on the basis of the extracted characteristic of the radio signal, a transmission communication protocol processing unit (17, 17A, 17B) for executing a communication protocol process of the encoded transmission data by selecting a communication protocol processing scheme on the basis of the extracted characteristic of the radio signal, and a modulator (18, 18A, 18B) for modulating the transmission data, that has undergone the communication protocol process, by selecting a modulation scheme on the basis of the extracted characteristic of the radio signal, and
the radio transmission unit (21) comprises a transmission radio signal converter (22) for converting the modulated transmission data into a radio signal, and a radio transmitter (23) for transmitting the converted radio signal.

12. The apparatus according to claim 11, **characterized in that** the transmission radio signal converter (22) converts the modulated transmission data into the radio signal by selecting a conversion scheme on the basis of the extracted characteristic of the radio signal.

13. A semiconductor integrated circuit device for a radio communication, **characterized by** comprising:
a receiver (4) for receiving a radio signal;
a radio signal characteristic extractor (5) for extracting a characteristic of the received radio signal; and
a reception radio signal converter (6) for converting the received radio signal into a reception signal.

14. The device according to claim 13, **characterized in that** the reception radio signal converter (6) converts the received radio signal into the reception signal by selecting a conversion scheme on the basis of the extracted characteristic of the radio signal.

15. The device according to claim 13, **characterized by** further comprising:
a transmission radio signal converter (22) for converting modulated transmission data into a radio signal; and
a radio transmitter (23) for transmitting the converted radio signal.

16. The device according to claim 15, **characterized in that** the transmission radio signal converter (22) converts the modulated transmission data into the radio signal by selecting a conversion scheme on the basis of the extracted characteristic of the radio signal.

17. A semiconductor integrated circuit device for a radio communication, **characterized by** comprising:
a demodulator (9, 9A, 9B) for demodulating a reception signal by selecting a demodulation scheme on the basis of an extracted characteristic of a radio signal;
a reception communication protocol processing unit (10, 10A, 10B) for executing a communication protocol process of the demodulated reception signal by selecting a communication protocol processing scheme on the basis of the extracted characteristic of the radio signal; and
a decoder (11, 11A, 11B) for decoding the reception signal, that has undergone the communication protocol process, by selecting a decoding scheme on the basis of the extracted characteristic of the radio signal.

18. The device according to claim 17, device **characterized by** further comprising:
an encoder (16, 16A, 16B) for encoding transmission data by selecting an encoding scheme on the basis of an extracted characteristic of a radio signal;
a transmission communication protocol processing unit (17, 17A, 17B) for executing a communication protocol process of the encoded transmission data by selecting a communication protocol processing scheme on the basis of the extracted characteristic of the radio signal; and
a modulator (18, 18A, 18B) for modulating the transmission data, that has undergone the communication protocol process, by selecting a modulation scheme on the basis of the extracted characteristic of the radio signal.

19. The device according to claim 18, **characterized by** further comprising:
a receiver (4) for receiving the radio signal;
a radio signal characteristic extractor (5) for extracting a characteristic of the received radio signal;
a reception radio signal converter (6) for converting the received radio signal into the reception signal;
a transmission radio signal converter (22) for converting the modulated transmission data into a radio signal; and
a radio transmitter (23) for transmitting the converted radio signal.

20. The device according to claim 19, **characterized in that** the reception radio signal converter (6) converts the received radio signal into the reception signal by selecting a conversion scheme on the basis of the extracted characteristic of the radio signal, and
the transmission radio signal converter (22) converts the modulated transmission data into the radio signal by selecting a conversion scheme on the basis of the extracted characteristic of the radio signal.

21. A radio communication method **characterized by** comprising the steps of:
receiving a radio signal;
extracting a characteristic of the received radio signal from the received radio signal;
converting the received radio signal into a reception signal by selecting a conversion scheme on the basis of the extracted characteristic of the radio signal;
demodulating the reception signal by selecting a demodulation scheme on the basis of the extracted characteristic of the radio signal;
executing a communication protocol process of the demodulated reception signal by selecting a communication protocol processing scheme on the basis of the extracted characteristic of the radio signal; and
decoding the reception signal, that has undergone the communication protocol process, by selecting a decoding scheme on the basis of the extracted characteristic of the radio signal.

22. The method according to claim 21, **characterized by** further comprising the steps of:
encoding a transmission signal by selecting a conversion scheme on the basis of an extracted characteristic of a radio signal;
executing a communication protocol process of the encoded transmission signal by selecting a communication protocol processing scheme on the basis of the extracted characteristic of the radio signal;
modulating the transmission signal, that has undergone the communication protocol process, by selecting a modulation scheme on the basis of the extracted characteristic of the radio signal;
converting the modulated transmission signal into a radio signal by selecting a conversion scheme on the basis of the extracted characteristic of the radio signal; and
transmitting the radio signal.

23. A radio communication system **characterized by** comprising:
a radio reception unit (1) for receiving a radio signal, extracting a characteristic of the received radio signal, and converting the received radio signal into a reception signal;
a modem/baseband reception/transmission signal processing unit (9, 9A, 9B, 10, 10A, 10B, 17, 17A, 17B, 18, 18A, 18B) for executing a reception signal process of the reception signal by selecting a reception signal processing scheme on the basis of the extracted characteristic of the radio signal, and converting transmission data into a transmission signal by selecting a transmission signal processing scheme on the basis of the extracted characteristic of the radio signal; and
a radio transmission unit (21) for converting the transmission signal into a radio signal, and transmitting the converted transmission signal.

24. The system according to claim 23, **characterized in that** the radio reception unit (1) comprises a receiver (4) for receiving the radio signal, a radio signal characteristic extractor (5) for extracting a characteristic of the received radio signal, and a reception radio signal converter (6) for converting the received radio signal into the reception signal,
the reception radio signal converter (6) converts the received radio signal into the reception signal by selecting a conversion scheme on the basis of the extracted characteristic of the radio signal,
the radio transmission unit (21) comprises a transmission radio signal converter (22) for converting the modulated transmission data into a radio signal, and a radio transmitter (23) for transmitting the converted radio signal, and
the transmission radio signal converter (22) converts the modulated transmission data into the radio signal by selecting a conversion scheme on the basis of the extracted characteristic of the radio signal.

25. An electronic apparatus with a radio communication function, **characterized by** comprising:
a radio reception unit (1) for receiving a radio signal, extracting a characteristic of the received radio signal, and converting the received radio signal into a reception signal;
a modem/baseband reception/transmission signal processing unit (9, 9A, 9B, 10, 10A, 10B, 17, 17A, 17B, 18, 18A, 18B) for executing a reception signal process of the reception signal by selecting a reception signal processing scheme on the basis of the extracted characteristic of the radio signal, and converting transmission data into a transmission signal by selecting a transmission signal processing scheme on the basis of the extracted characteristic of the radio signal; and
a radio transmission unit (21) for converting the transmission signal into a radio signal, and transmitting the converted transmission signal.

26. The apparatus according to claim 25, **characterized in that** the radio reception unit (1) comprises a receiver (4) for receiving the radio signal, a radio signal characteristic extractor (5) for extracting a characteristic of the received radio signal, and a reception radio signal converter (6) for converting the received radio signal into the reception signal,
the reception radio signal converter (6) converts the received radio signal into the reception signal by selecting a conversion scheme on the basis of the extracted characteristic of the radio signal,
the radio transmission unit (21) comprises a transmission radio signal converter (22) for converting the modulated transmission data into a radio signal, and a radio transmitter (23) for transmitting the converted radio signal, and
the transmission radio signal converter (22) converts the modulated transmission data into the radio signal by selecting a conversion scheme on the basis of the extracted characteristic of the radio signal.

27. A semiconductor integrated circuit device for a radio communication, **characterized by** comprising:
a demodulator/baseband reception signal processing unit (9, 9A, 9B, 10, 10A, 10B) for executing a reception signal process of a reception signal by selecting a reception signal processing scheme on the basis of an extracted characteristic of a radio signal; and
a modulator/baseband reception signal processing unit (17, 17A, 17B, 18, 18A, 18B) for executing a transmission signal process of a reception signal by selecting a transmission signal processing scheme on the basis of the extracted characteristic of the radio signal.

28. The device according to claim 27, **characterized by** further comprising:
a receiver (4) for receiving the radio signal;
a radio signal characteristic extractor (5) for extracting a characteristic of the received radio signal;
a reception radio signal converter (6) for converting the received radio signal into the reception signal;
a transmission radio signal converter (22) for converting the modulated transmission data into a radio signal; and
a radio transmitter (23) for transmitting the converted radio signal.

29. The device according to claim 28, **characterized in that** the reception radio signal converter (6) converts the received radio signal into the reception signal by selecting a conversion scheme on the basis of the extracted characteristic of the radio signal, and
said transmission radio signal converter (22) converts the modulated transmission data into the radio signal by selecting a conversion scheme on the basis of the extracted characteristic of the radio signal.

30. A radio communication method **characterized by** comprising the steps of:
receiving a radio signal;
extracting a characteristic of the received radio signal from the received radio signal;
converting the received radio signal into a reception signal by selecting a conversion scheme on the basis of the extracted characteristic of the radio signal;
executing a reception signal process of the reception signal by selecting a reception signal processing scheme on the basis of the extracted characteristic of the radio signal;
executing a transmission signal process of the encoded transmission signal by selecting a transmission signal processing scheme on the basis of the extracted characteristic of the radio signal;
converting the transmission signal, that has undergone the transmission signal process into a radio signal, by selecting a conversion scheme on the basis of the extracted characteristic of the radio signal; and
transmitting the radio signal.
